# EUROPÄISCHE PATENTSCHRIFT

(11) **EP 3 566 274 B1**
(45) Veröffentlichungstag und Bekanntmachung des Hinweises auf die Patenterteilung: **18.01.2023**
(21) Anmeldenummer: 17836029.3
(22) Anmeldetag: 21.12.2017
(51) Int. Cl.: H02G 3/22

(54) **KABELEINFÜHRUNG**
CABLE LEAD-IN
ENTRÉE DE CÂBLE

(30) Priorität: 05.01.2017 CH 142017
(43) Veröffentlichungstag der Anmeldung: 13.11.2019
(73) Patentinhaber: Agro AG, 5502 Hunzenschwil (CH)
(72) Erfinder: ROSAMILIA, Valerio, 5502 Hunzenschwil (CH); MEIER, Niklaus, 5037 Muhen (CH)
(74) Vertreter: Rentsch Partner AG
(86) Internationale Anmeldenummer: PCT/EP2017/084065
(87) Internationale Veröffentlichungsnummer: WO 2018/127428

(56) Entgegenhaltungen:
- EP-A1- 2 030 653
- EP-A1- 2 736 137
- EP-A1- 2 928 034
- EP-A2- 1 503 471
- DE-A1-102007 012 187
- DE-A1-102013 014 794

## Beschreibung

Die Erfindung liegt auf dem Gebiet der Kabeleinführungen zum Einführen eines oder mehrerer Kabel in ein Gehäuse.

Kabeldurchführungen zum Durchführen und Abdichten von mehreren Kabeln durch eine Öffnung in einem Gehäuse eines elektrischen Gerätes sind aus dem Stand der Technik bekannt. Zum Durchführen von mehreren Kabeln sind Kabeleinführungen bekannt, die einen an dem Gehäusedurchbruch befestigten Rahmen aufweisen mit darin verbauten verformbaren Einsätzen, welche die einzuführenden Kabel umgeben und abdichten. Diese weisen in der Regel einen komplizierten und schwierig zu montierenden Aufbau auf. Es handelt sich um wenig variable Lösungen, so dass für unterschiedliche Problemstellungen eine Vielzahl von unterschiedlichen Komponenten erforderlich ist. Nachträgliches Umbauen und Anpassen, ist nur begrenzt möglich.

EP2736137B1, publiziert am 24.08.2016 von Murrplastik Systemtechnik GmbH, beschreibt eine Vorrichtung zum Abdecken und/oder Abdichten eines zur Durchführung von mindestens einer Leitung bestimmten Wanddurchbruchs. Die Vorrichtung umfasst einen am Rand des Wanddurchbruchs befestigbaren starren Rahmen, der mindestens eine Rahmenöffnung zur Durchführung einer Leitung aufweist. An der Rahmenöffnung ist eine Trennwand aus elastomerem Material angeordnet, die dazu bestimmt ist, eine durch die betreffende Rahmenöffnung durchgeführte Leitung rings zu umschliessen. Nachteilig ist, dass der Rahmen und die Trennwand stoffschlüssig miteinander verbunden sind und das Ersetzen der Trennwand bei Abnutzung oder bei Austausch von Kabeln mit unterschiedlichen Durchmessern nicht einfach möglich ist.

EP1595318B1, publiziert am 27.12.2006 ebenfalls von Murrplastik Systemtechnik GmbH, betrifft eine Vorrichtung zum Abdecken und Abdichten eines zur Durchführung von Kabeln bestimmten Wanddurchbruchs. Die Kabeldurchführungsvorrichtung weist eine Halteplatte aus Hartgummi auf, die mehrere im Abstand voneinander angeordnete Plattenöffnungen enthält, die zur Aufnahme von Tüllen aus Weichgummi bestimmt sind. Die Tüllen weisen eine Durchgangsöffnung für ein Kabel auf und sind über einen elastisch aufweitbaren Randschlitz radial von aussen zugänglich. Der Randschlitz ermöglicht es, die Tülle an einer beliebigen Stelle auf ein Kabel aufzustecken, so dass diese durch die Durchgangsöffnung hindurchgreift. Eine separate Befestigung von der Halteplatte und einem Rahmen, der diese umgibt, ist jedoch nicht möglich.

EP2030653B1, publiziert am 27.05.2015 von Cablequick AG, betrifft eine Kabeldurchführungsvorrichtung mit Brandschutz. Die Vorrichtung weist eine Grundplatte, eine Rückplatte und eine dazwischenliegende Brandschutzplatte auf. Die Brandschutzplatte besteht aus einem sich bei Hitze aufschäumendem Material, welches die in der Vorrichtung befindlichen Kabeldurchführungen verschliesst. Mit einem Mittel zur Druckbeaufschlagung der Brandschutzplatte, welches bevorzugt als Federelement ausgestaltet ist, wird auf die Brandschutzplatte oder auf das ganze Plattensystem ein gewisser Druck ausgeübt, um aufschäumendes Material schneller durch die vorhandenen Öffnungen zu zwingen.

DE19731448C2, publiziert am 25.10.2001 von Stünzi Industrieelektronik GmbH, betrifft eine Befestigungsvorrichtung für Rundkabel in Wandungen zum Befestigen, Abdichten und Zugentlasten von Kabeln. Die Vorrichtung ist als Flanschgehäuse mit integrierter Sandwichkonstruktion aufgebaut und weist mindestens ein Flanschgehäuse, eine Zwischenlage-Rückhalteplatte zur Verriegelung, eine elastische Platte und eine Gegenhalteplatte auf. Hierbei sind sowohl das Flanschgehäuse mit Durchführungen für die Kabel als auch die einzelnen Sandwichplatten mit vorgestanzten, im Durchmesser aufeinander abgestimmten Löchern in Linie zu den Flanschdurchführungen versehen, so dass Kabel mit verschiedenen Durchmessern durch das Gehäuse einführbar sind und sich beim Zurückziehen automatisch zugentlasten. Die Vorrichtung zeigt zwar einen modularen Aufbau, jedoch muss auch hier der gesamte Rahmen inklusive der Gegenhalteplatte von dem Gehäuse abmontiert werden, um die elastische Platte auszutauschen.

EP0901190A2**,** publiziert am 10.03.1999 von Rose-Elektrotechnik GmbH + Co KG beschreibt ein Kabel-Stecker-Durchführsystem für Gehäuse, welche elektronische Bauteile aufnehmen. Das System weist eine an einer Wandung des Gehäuses im Bereich eines Durchbruches festlegbare Haube mit mindestens einem Durchlass für das Kabel mit Stecker und mindestens einen in die Haube eingesetzten, mit der Haube und der Gehäusewandung einen Pressdruck eingehenden, flexiblen und/oder elastischen Einsatz auf. Der Einsatz weist ein zu einem Einsatzrand geschlitztes Kabel-Einlegeloch auf. Nachteilig ist hier, dass Haube und Einsatz gemeinsam an der Gehäusewand angebracht werden müssen. Ein schneller Austausch des Einsatzes ist daher nicht möglich. Zum weiteren Stand der Technik kann auf die DE102007012187A1 und DE102013014794A1 hingewiesen werden.

Eine Aufgabe der Erfindung besteht darin eine einfach zu handhabende und an die jeweilige Anwendung flexibel anpassbare Kabeleinführung für mehrere Kabel bereitzustellen.

Eine erfindungsgemässe Kabeleinführung ermöglicht das Durchführen von mindestens einem Kabel durch einen Durchbruch in einem Gehäuse. Sie weist ein rahmenförmiges Unterteil mit einer ersten Durchgangsöffnung zum Durchführen des mindestens einen Kabels auf. Das rahmenförmige Unterteil wird in der Regel über dem Durchbruch (Öffnung) des Gehäuses platziert und kann über erste Befestigungsmittel mit der Gehäusewand wirkverbunden werden. Weiterhin umfasst die Kabeleinführung ein Oberteil mit mindestens einer zweiten Durchgangsöffnung zum Durchführen des mindestens einen Kabels. Dieses kann mit zweiten Befestigungsmitteln am Unterteil und/oder am Gehäuse befestigt werden. Je nach Ausgestaltung wird das Unterteil zuerst am Gehäuse befestigt und dann das Oberteil am Unterteil. Bei Bedarf können ebenfalls die ersten und die zweiten Befestigungsmittel so ausgestaltet werden, dass zuerst das Oberteil über die zweiten Befestigungsmittel mit dem Unterteil und dieses dann über die ersten Befestigungsmittel am Gehäuse befestigt werden können. Die zwei separaten Befestigungsmittel haben den Vorteil, dass die Befestigung des Unterteiles mit der Gehäusewand vom Prinzip her unabhängig von der Befestigung des Oberteils mit dem Unterteil durchführbar ist. Alternativ oder ergänzend dazu können das Unterteil und/oder das Oberteil auch von innen her an dem Gehäuse befestigbar sein. Auf diese Weise liegt die Kabeleinführung zwar von aussen an dem Gehäuse an, jedoch können das Oberteil und/oder das Unterteil nur über die ersten, bzw. zweiten Befestigungsmittel von innerhalb des Gehäuses gelöst (respektive angebracht) werden. Dies hat den Vorteil, dass eine gewisse Manipulationssicherheit von ausserhalb erreicht wird. Hierzu kann es ebenfalls von Vorteil sein, dass das Material des aussen liegenden Oberteiles aus einem resistenteren Material als das Unterteil auszugestalten und die Kabeleinführung somit gegen gewaltvolle äussere Einflüsse zu schützen.

Ausführungsformen der erfindungsgemässen Kabeleinführung werden nachfolgend näher erläutert. In einer Variante ist das Unterteil so ausgestaltet, dass es mit mehreren zweiten Befestigungsmitteln derselben oder unterschiedlicher Art gleichzeitig oder alternativ wirkverbunden werden kann. Dies ermöglicht im Vergleich zum Stand der Technik einen flexiblen Aufbau und eine flexible Konfiguration von unterschiedlichen Kabelverschraubungen basierend auf ein und demselben multifunktional einsetzbaren Unterteil (Basisteil).

In der Regel umfasst die Kabeleinführung ein oder mehrere Durchführelemente zum eigentlichen Durchführen des mindestens einen Kabels. Das mindestens eine Durchführelement ist mit Vorteil in einem Bereich angeordnet, der sich innerhalb der Kontur der ersten Durchgangsöffnung des Unterteils befindet. In gewissen Ausführungsformen ist eine Überlappung in lateraler Richtung möglich, z.B. wenn das Durchführelement mit dem Unterteil und/oder dem Oberteil verkeilt oder zwischen diesen eingeklemmt ist. Dies ist insbesondere bei Ausführungsvarianten der Fall bei denen das Unterteil, bzw. das Oberteil als Klemmelement zum Klemmen des Durchführelementes im montierten Zustand dient.

Gute Resultate und eine gleichmässige Verteilung der Kräfte können erreicht werden, wenn eines oder mehrere der zweiten Befestigungsmittel in Umfangsrichtung (alternierend) zwischen den ersten Befestigungsmitteln angeordnet sind. Je nach Ausgestaltung können die zweiten Befestigungsmittel am Oberteil und/oder am Unterteil angebracht sein. In gewissen Varianten kann abhängig vom Anwendungsgebiet gewählt werden, ob die zweiten Befestigungsmittel z.B. eine Schraubverbindung und/oder eine Schnappverbindung und/oder eine Klebverbindung und/oder eine Schweissverbindung sind. Beispielsweise können bei einer Schraubverbindung am Oberteil Durchgangslöcher für Befestigungsschrauben angeordnet sein, durch welche die Befestigungsschrauben durchgesteckt und in entsprechende Gewindelöcher im Unterteil eingeschraubt werden können. Alternativ oder ergänzend können zum Beispiel bei Schnappverbindungen am Oberteil Schnapphaken als zweite Befestigungsmittel angebracht sein, welche in dieselben oder andere Löcher im Unterteil einschnappbar sind. Die Löcher im Unterteil können hierbei, falls erforderlich, durch passende Einsätze an die jeweilige Befestigungsart angepasst werden. Alternativ oder in Ergänzung können auch befestigungsmittelspezifische Einsätze für entsprechende Löcher am Oberteil vorgesehen werden, um zweite entsprechende Befestigungsmittel, wie z.B. Schrauben, etc. verwenden zu können.

Das Unterteil kann nicht nur zur Wirkverbindung von mehreren Oberteilen, sondern auch von mehr als einem unterschiedlichen Typ von Durchführelement geeignet sein. Ausführungsvarianten von verschiedenen Typen von Durchführelementen, werden unter anderem in den nachfolgenden Figuren, zur Veranschaulichung des Prinzips der erfindungsgemässen Kabelverschraubung, näher erläutert. Mögliche Typen von Durchführelementen sind z.B.: Dichtplatte, Kabelverschraubung, Dichteinsatz oder eine Kombination davon.

Mit Vorteil kann das Durchführelement eine deformierbare Komponente aus elastischem Kunststoff aufweisen, welche in montiertem Zustand zwischen dem Oberteil und dem Unterteil eingeklemmt ist, und zum Klemmen, bzw. Abdichten des mindestens einen durchgeführten Kabels dienen. Ergänzend dazu kann ein Klemmmittel vorhanden sein, mittels dem die Stärke der Klemmung der elastischen Kunststoffkomponente einstellbar ist. Dies kann für den Typ Dichteinsatz beispielsweise mittels einer Gewindeschraube umgesetzt werden, welche durch das Unterteil einschraubbar ist und mit zunehmender Einschraubtiefe das mindestens eine komprimierbare Durchführelement senkrecht zur Kabeldurchführungsrichtung zusammendrückt. Zwischen der Klemm-Schraube und dem Durchführelement kann sich weiter ein Bauteil befinden, welches die Klemmkraft möglichst optimal auf das Durchführelement überträgt.

Bei grösseren, plattenförmigen Durchführelementen oder bei mehreren nebeneinander angeordneten Durchführelementen kann eine Grundplatte vorgesehen werden, welche zur Abstützung und Stabilisierung dienen kann. Die Grundplatte weist ebenfalls eine oder mehrere Durchgangsöffnungen oder Schlitze zum seitlichen Einführen eines oder mehrerer Kabel bei der Montage auf. Bei Bedarf können im Bereich der Grundplatte, bzw. dem Unterteil eines oder mehrere Zugentlastungselemente, z.B. Zugentlastungsleisten, vorgesehen werden an welchen eines oder mehrere Kabel zwecks Zugentlastung befestigt werden können. Die Grundplatte kann an der Hinterseite des Unterteils, welche der Gehäusewand zugewandt ist, über die ersten Befestigungsmittel wirkverbunden werden. Diese Variante ist besonders vorteilhaft, wenn es sich bei dem Durchführelement um den Typ Dichteinsatz handelt, da diese in der Regel in Richtung der Kabeleinführung (x-Richtung, senkrecht zur Gehäusewand) tiefer ausgestaltet sind als die Dichtplatten. Für den Fall, dass Dichtplatten oder Kabelverschraubungen montiert sind, kann die Grundplatte auch platzsparend von der Seite des Unterteils, welche von der Gehäusewand wegweist, in der ersten Durchgangsöffnung der Grundplatte eingebracht werden. Dies hat den Vorteil, dass die Kabeldurchführung insgesamt weniger tief ist. Dafür kann die Grundplatte an dem Unterteil über mindestens ein Befestigungselement wirkverbunden werden. Besonders vorteilhaft kann es hierbei sein, das mindestens eine Befestigungselement mit einem Hintergriff auszustatten, so dass die genaue Position der Grundplatte in Richtung der Kabeleinführung über das Befestigungselement definiert werden kann. Auf diese Weise können bei der modularen Verwendung von unterschiedlich tiefen Dichtplatten diese über die so positionierte Grundplatte optimal stabilisiert werden. Ergänzend hierzu kann das Befestigungselement ebenfalls dazu dienen das mindestens eine Durchführelement zu komprimieren, um die Dichtwirkung so zu erhöhen. Die Grundplatte kann bei Bedarf als Brandschutzelement ausgestaltet sein und aus im Brandfall aufquellendem Material bestehen. Ergänzend zu den oben aufgelisteten Variationen kann die erfindungsgemässe Kabeleinführung ein Schirmblech umfassen, welches zum Abschirmen von elektro-magnetischer Strahlung dient. Dieses kann mittels der ersten Befestigungsmittel mit dem Unterteil wirkverbunden sein.

Bei Bedarf können das Oberteil und/oder das Unterteil mehrteilig ausgestaltet sein, so dass durch die Teilung die Durchgangsöffnungen im Unterteil, bzw. im Oberteil von der Seite her zugänglich sind. Dies ist insbesondere dann vorteilhaft, wenn mehrere Kabel schnell gemeinsam montiert oder ausgetauscht werden müssen.

Als Materialien für das Unterteil, Oberteil und/oder die Grundplatte eignen sich technische Kunststoffe. Mit Vorteil können diese Teile durch Spitzgusstechnik hergestellt werden.

Für den Fall, dass eine zweite Durchgangsöffnung des Oberteils nicht mit einem Kabel bestückt ist, kann diese ebenfalls von einem vorzugsweise dichtenden Stopfen verschlossen werden.

Die gesamte Kabeleinführung kann ebenfalls durch eine Abdeckung ergänzt werden, welche die Kabeleinführung vor Einflüssen von aussen vor Beschädigung und/oder Spritzwasser schützt. In einer Ausführungsform ist diese aus Silikon hergestellt. Die Abdeckung kann hierzu entsprechende weitere Durchgangsöffnungen zur Kabeleinführung ausweisen.

Anhand der in den nachfolgenden Figuren gezeigten Ausführungsbeispielen und der dazugehörigen Beschreibung werden Aspekte der Erfindung näher erläutert. Es zeigen:
- Fig. 1: Ein erstes Ausführungsbeispiel einer nicht unter den Schutzumfang der Ansprüche fallenden Kabeleinführung;

- Fig. 2: Ein zweites Ausführungsbeispiel einer erfindungsgemässen Kabeleinführung;
- Fig. 3: Ein drittes Austührungsbeispiel einer nicht unter den Schutzumfang der Ansprüche fallenden Kabeleinführung;

- Fig. 4: Ein viertes Austührungsbeispiel einer nicht unter den Schutzumfang der Ansprüche fallenden Kabeleinführung;

- Fig. 5: Ein fünftes Austührungsbeispiel einer nicht unter den Schutzumfang der Ansprüche fallenden Kabeleinführung;
- Fig. 6: Ein sechstes Ausführungsbeispiel einer nicht unter den Schutzumfang der Ansprüche fallenden Kabeleinführung;

- Fig. 7: Ein siebtes Ausführungsbeispiel einer erfindungsgemässen Kabeleinführung;
- Fig. 8: Ein achtes Ausführungsbeispiel einer nicht unter den Schutzumfang der Ansprüche fallenden Kabeleinführung;

- Fig. 9: Ein Baukastensystem zur Bestückung von einer Anzahl unterschiedlicher Ausführungsformen von Kabeleinführungen gemäss der Erfindung.

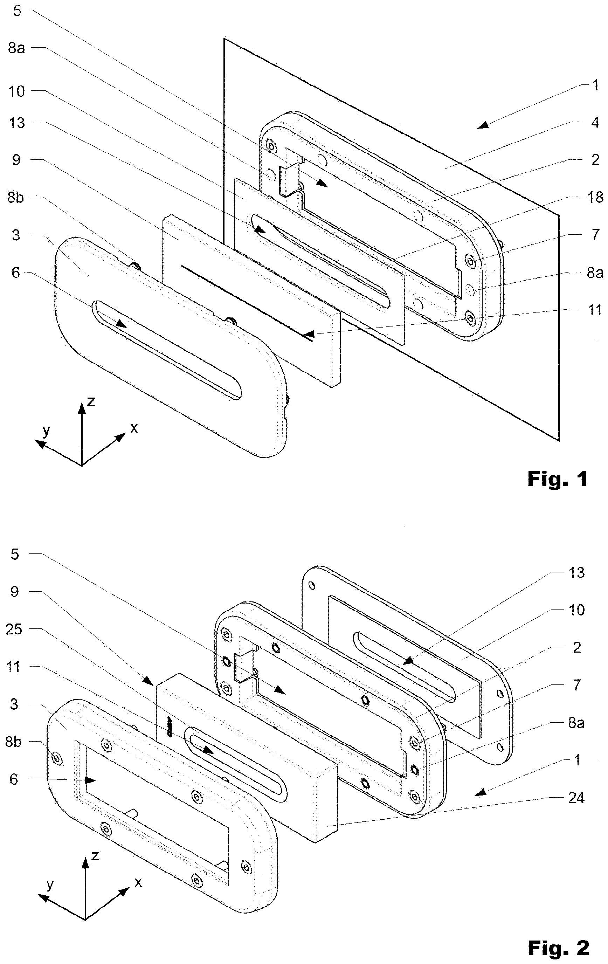

In den nachfolgend beschriebenen **Figuren 1** bis **8** sind die verschiedenen Ausführungsvarianten der erfindungsgemässen Kabeleinführungen in einer perspektivischen Explosionsdarstellung (entlang der z-Achse) von schräg oben dargestellt.

**Figur 1** zeigt eine erste Ausführungsform einer nicht unter den Schutzumfang der Ansprüche fallenden Kabeleinführung 1 in einer perspektivischen Explosionsdarstellung von schräg oben. Die Kabeleinführung 1 weist ein rahmenförmiges Unterteil 2, ein damit kompatibles Oberteil 3, sowie ein hier plattenförmiges Durchführelement 9 mit einem elastisch aufweitbaren Schlitz 11 auf. Der Schlitz 11 dient zur Aufnahme eines Kabels (nicht näher dargestellt). Das Durchführelement 9 besteht in der gezeigten Ausführungsform aus einem deformierbaren Material, z.B. Schaumstoff oder Weichgummi oder einer Kombination davon, etc.

Das Unterteil 2 weist erste Befestigungsöffnungen 7 auf, welche Teil von ersten Befestigungsmittel sind. Die ersten Befestigungsöffnungen 7 sind auf dem Umfang des Rahmens des Unterteils 2 verteilt und umgeben die erste Durchgangsöffnung 5 des Unterteiles 2. Die ersten Befestigungsöffnungen 7 dienen zur direkten oder via dem Oberteil 3 indirekten Wirkverbindung des Unterteils 2 mit der Gehäusewand 4 des Gehäuses. Dazu können erste Befestigungsschrauben, welche ebenfalls Teil von ersten Befestigungsmittel sein können, durch sie hindurch mit dem Gehäuse wirkverbunden werden.

Das Oberteil 3 weist in der gezeigten Ausführungsform nur eine einzige zweite Durchgangsöffnung 6 zum Durchführen von mindestens einem Kabel auf. Die zweite Durchgangsöffnung 6 hat hierbei eine längliche Form, so dass bei Bedarf mehrere Kabel nebeneinander und/oder ein Flachkabel durch die zweite Durchgangsöffnung 6 in das Gehäuse eingeführt werden können. An dem Oberteil 3 als auch an dem Unterteil 2 sind jeweils zweite Befestigungsmittel 8a, 8b angebracht, welche gemeinsam eine formschlüssige Wirkverbindung dieser beiden Teile ermöglichen. Bei den zweiten Befestigungsmitteln 8b am Oberteil 3 handelt es sich in dieser Variante um zylinderförmige Schnappvorrichtungen, welche in die lochförmigen zweiten Befestigungsmittel 8a am Unterteil 2 eingreifen und dort einrasten. Die zweiten Befestigungsmittel 8 sind um den Umfang des rahmenförmigen Unterteils 2 zwischen den ersten Befestigungsmitteln 7 angebracht. Zwischen dem Unterteil 2 und dem Oberteil 3 befindet sich weiter das Durchführelement 9 zum Durchführen des mindestens einen Kabels durch die Kabeleinführung 1. Dieses ist innerhalb der Kontur der ersten Durchgangsöffnung 5 angeordnet. Das Durchführelement 9 ist als Dichtplatte ausgeführt und besteht aus elastischem Kunststoff. Die Dichtplatte 9 kann bei Bedarf im montierten Zustand zwischen dem Unterteil 2 und dem Oberteil 3 gezielt eingeklemmt und dadurch so verformt werden, dass eine Verengung, bzw. Komprimierung des Schlitzes 1 1 resultiert. Dadurch wird eine Halte- und/oder Dichtwirkung auf das sich darin befindliche Kabel ausgeübt. Weiterhin umfasst die Kabeleinführung 1 eine Grundplatte 10, welche in die erste Durchgangsöffnung 5 des Unterteils 1 eingelegt und von einer rückseitig angeordneten Berandung 18 gehalten ist. Die Berandung 18 ragt in die Kontur der ersten Durchgangsöffnung 5 hinein und kann, wie in diesem Fall dargestellt, zumindest bereichsweise über den Umfang der ersten Durchgangsöffnung 5 vorstehen. In der Grundplatte 10 befindet sich ebenfalls eine Durchgangsöffnung 13 die zwar eine ähnliche Form aufweist, jedoch grösser ausgestaltet ist und selber nicht zum Dichten gedacht ist. Je nach Anwendungsgebiet sind andere Ausgestaltungen möglich.

In **Figur 2** ist eine erfindungsgemässe Variante der Kabeleinführung 1, wie in **Figur 1** dargestellt, gezeigt. Das Unterteil 2 ist identisch zum Unterteil 2 aus **Figur 1**. Hier ist, anstatt der einteiligen Dichtplatte, ein mehrteiligerer und dickerer Dichteinsatz 9 vorgesehen, welcher ebenfalls zwischen dem Oberteil 3 und dem Unterteil 2 positioniert ist. Das Oberteil 3 ist über die zweiten Befestigungsmittel 8 mit dem Unterteil 2 wirkverbunden. Im Gegensatz zu der in **Figur 1** gezeigten Variante, wird hier das Oberteil 3 mit dem Unterteil 2 verschraubt. Hierzu sind in den Löchern des Unterteils 8a, welche Teil der zweiten Befestigungsmittel 8 darstellen, Befestigungshülsen mit einem Innengewinde eingebracht (hier nicht näher dargestellt). Der gezeigte Dichteinsatz 9 besteht weiter aus einem äusseren und einem inneren Einsatz 24, 25. Der innere Einsatz 25 ist hierbei je nach Durchmesser des einzuführenden Kabels modular austauschbar und bietet somit eine an das Kabel angepasste optimale Dichtwirkung. Weitergehend kann für eine bessere Dichtwirkung der innere Einsatz 25 weichelastischer sein als der äussere Einsatz 24. Die zentrale dritte Durchgangsöffnung 1 1 im inneren Einsatz 25 hat hier eine längliche, schlitzartige Form. Da ein Dichteinsatz 9 meistens tiefer/dicker ist als eine ebenfalls verwendbare, dünnere Dichtplatte kann eine Kombination mit einer Grundplatte 10 vorteilhaft sein, welche von hinten (aus Richtung der Gehäusewand 4) und über die ersten Befestigungsmittel 7 an das Unterteil 2 angebracht werden kann.

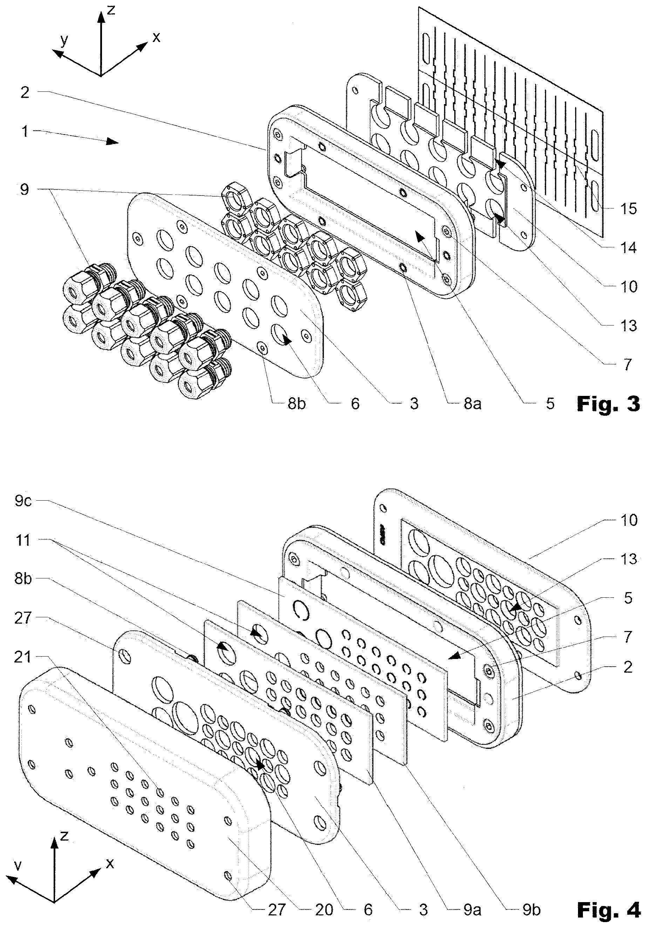

**Figur 3** zeigt eine dritte Ausführungsform einer nicht unter den Schutzumfang der Ansprüche fallenden Kabeleinführung 1 zur Einführung von mindestens einem Kabel in ein Gehäuse mit einem Unterteil 2 und einem Oberteil 3. Das Unterteil 2 wird über erste Befestigungsmittel 7 mit der Gehäusewand 4 verschraubt. Das Oberteil 3 weist mehrere zweite Durchgangsöffnungen 6 auf in diese jeweils Durchführelemente 9 vom Typ einer Kabelverschraubungen angebracht sind. Andere Durchführelemente können ebenfalls bei Bedarf modular angebracht, respektive ausgetauscht werden. Das Oberteil 3 mit den daran angebrachten Durchführelementen 9 wird über die zweiten Befestigungsmittel 8 an dem Unterteil 2 angeschraubt. Eine Grundplatte 10 kann über die ersten Befestigungsmittel 7 an die Rückseite des Unterteils 2, welche zur Seite der Gehäusewand zeigt, angebracht werden. Die Grundplatte 10 weist zur Durchführung der Kabel multiple vierte Durchgangsöffnungen 13 auf. Die vierten Durchgangsöffnungen 13 sind Teil der Aussenkontur der Grundplatte 10, so dass ein Schlitz 14 gebildet wird über den das Kabel in einen innenliegenden Bereich der Öffnung eingeführt werden kann, wo das Kabel dann nach der Montage verbleibt. Abschliessend, zwischen der Gehäusewand 4 und der Grundplatte 10, kann ebenfalls ein Schirmblech 15 über die ersten Befestigungsmittel 7 wirkverbunden werden. Das Schirmblech 15 dient zur einfachen und schnellen Schirmkontaktierung mit der Gehäusewand 4.

**Figur 4** zeigt eine vierte Ausführungsform einer nicht unter den Schutzumfang der Ansprüche fallenden Kabeleinführung 1 umfassend ein Unterteil 2, ein Oberteil 3, eine zwischen Gehäusewand 4 und Unterteil 2 über die ersten Befestigungsmittel 7 angebrachte Grundplatte 10, multiple Durchführelemente 9 sowie eine Abdeckung 20. Die multiplen Durchführelemente 9a, 9b, 9c sind zwischen dem Oberteil 3 und dem Unterteil 2 in Richtung der einzuführenden Kabel (x-Richtung) hintereinander angeordnet. Die Abdeckung 20 deckt die gesamte Kabeleinführung 1 formschlüssig gegen die Gehäusewand 4 ab und schütz somit die Oberfläche des Oberteils 3, respektive des Unterteils 2 vor Beschädigungen und/oder vor Spritzwasser. Als Material für die Abdeckung 20 eignet sich z.B. Silikon. An der Abdeckung 20 sind fünfte Durchgangsöffnungen 21 für die einzuführenden Kabel vorhanden. Weiterhin können an der Abdeckung 20 und dem Oberteil 3 Aussparungen 27 vorgesehen sein, welche den Zugang zu den ersten Befestigungsmitteln 7 am Unterteil 2 bei angebrachtem Oberteil 3, respektive angebrachter Abdeckung 20, ermöglichen. Auf diese Weise kann man die Kabeleinführung 1 von der Gehäusewand 4 lösen, ohne zuvor die Abdeckung 20 und/oder das Oberteil 3 abmontieren zu müssen. Die Durchführelemente 9a, 9b, 9c in der gezeigten Ausführungsform sind vom Typ Dichtplatte. Die Dichtplatten 9a, 9b und 9c weisen jeweils multiple dritte Durchgangsöffnungen 11 und/oder Bereiche auf, welche zum Durchstossen mit einem Kabel gedacht sind und nach dem Durchstossen dritte Durchgangsöffnungen 1 1 bilden. Die jeweiligen Bereiche und/oder dritten Durchgangsöffnungen 11 einer Dichtplatte, fluchten zu den Bereichen und/oder dritten Durchgangsöffnungen 11 der jeweiligen anderen Dichtplatten. Weiterhin befinden sich diese Bereiche und/oder dritten Durchgangsöffnungen 11 der Dichtplatten 9 innerhalb der Kontur der ersten Durchgangsöffnung 5 des Unterteils 2.

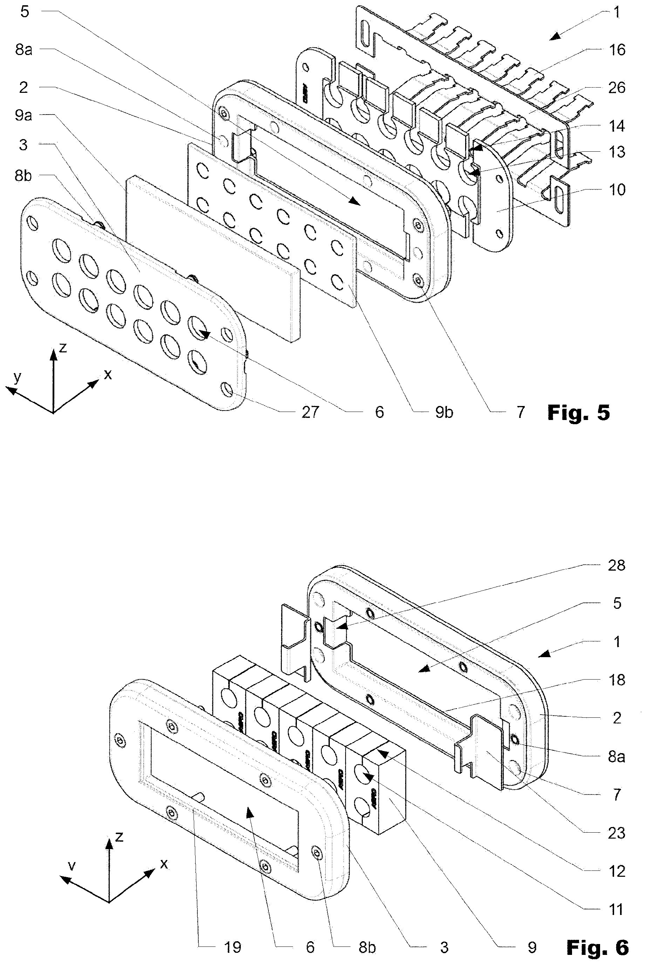

**Figur 5** zeigt eine fünfte Austührungstorm einer nicht unter den Schutzumfang der Ansprüche fallenden Kabeleinführung 1, umfassend ein Oberteil 3, ein Unterteil 2, eine Grundplatte 10, zwei Durchführelemente 9a, 9b vom Typ Dichtplatte, sowie Zugentlastungsleisten 16, welche an einem separat ausgeführten Zugentlastungselement 26 angebracht sind. Dieses Zugentlastungselement 26 ist über die ersten Befestigungsmittel 7 wirkverbunden und zwischen Unterteil 2 und Gehäusewand 4 angeordnet. Zugentlastungsleisten 16 können zumindest bereichsweise durch den Durchbruch der Gehäusewand 4 in das Gehäuse hineinragen. Das Oberteil 3 wird über die zweiten Befestigungsmittel 8 mit dem Unterteil 2 wirkverbunden, welche auf das Oberteil 3 und das Unterteil 2 aufgeteilt sind. Bei den zweiten Befestigungsmittel 8b am Oberteil 3 handelt es sich wieder um zylinderförmige Schnappvorrichtungen, welche in die lochförmigen zweiten Befestigungsmittel 8a am Unterteil 2 eingreifen und dort einrasten. Die zweiten Befestigungsmittel 8a sind um den Umfang des rahmenförmigen Unterteils 2 zwischen den ersten Befestigungsmitteln 7 angebracht. Am Oberteil 3 sind multiple zweite Durchgangsöffnungen 6 vorhanden. Die zweiten Durchgangsöffnungen 6 dienen zum Durchführen von mindestens einem Kabel. Weitere Aussparungen 27 am Oberteil 3 dienen dazu Zugriff auf die ersten Befestigungsmittel 7 zu haben, auch wenn das Oberteil 3 mit dem Unterteil 2 über die zweiten Befestigungsmittel 8 wirkverbunden ist. Die beiden Dichtplatten 9a, 9b dienen einerseits zum Abdichten der durchzuführenden Kabel und andererseits bietet die Ausgestaltung der Dichtplatten 9a, 9b eine gewisse Zugentlastung für die durchzuführenden Kabel. Die Zugentlastung wird dadurch erzeugt, dass die dritten Durchgangsöffnungen 11 an den beiden Dichtplatten 9a, 9b erst durch Durchstehen der Dichtplatten erzeugt werden und keine vorkonfektionierten Öffnungen sind, wodurch die durchgezogenen Kabel besser in Durchführungsrichtung (x-Richtung) fixiert werden.

**Figur 6** zeigt eine sechste Ausführungsform einer erfindungsgemässen Kabeleinführung 1. Diese Ausführungsform unterscheidet sich von der in **Figur 2** gezeigten Variante dadurch, dass multiple Durchführelemente 9 in der Form von Dichteinsätzen aus elastischem Kunststoff vorhanden sind. Diese sind nebeneinander zwischen dem Unterteil 2 und dem Oberteil 3 angeordnet und haben jeweils eine dritte Durchgangsöffnung 1 1 zum Durchführen eines Kabels. Das durchzuführende Kabel kann über einen seitlichen Schlitz 12 in die dritte Durchgangsöffnung 11 eingebracht werden. Die Durchführelemente 9 werden vor dem Herausfallen aus der zweiten Durchgangsöffnung 6 des Oberteiles 3, respektive der ersten Durchgangsöffnung 5 des Unterteiles 2 durch einen jeweiligen umlaufenden Rand 18, 19 am Unterteil 2 bzw. am Oberteil 3 gehindert. Die umlaufenden Ränder 18, 19 ragen hierbei jeweils in die Konturen der ersten, bzw. zweiten Durchgangsöffnung 5, 6 hinein. Eine Fixierung der Durchführelemente 9 bzw. eine Verstärkung der Dichtwirkung der Durchführelemente 9 kann anstatt mittels einer Grundplatte durch zwei Befestigungselemente 23 erzielt werden. Die mit dem Unterteil 2 wirkverbundenen Befestigungselemente 23 bilden mit diesem einen Hintergriff zu dessen Befestigung. Hierzu befinden sich an dem Unterteil 2 zwei entsprechende Eingriffe 28 in die die Befestigungselemente 23 eingreifen können.

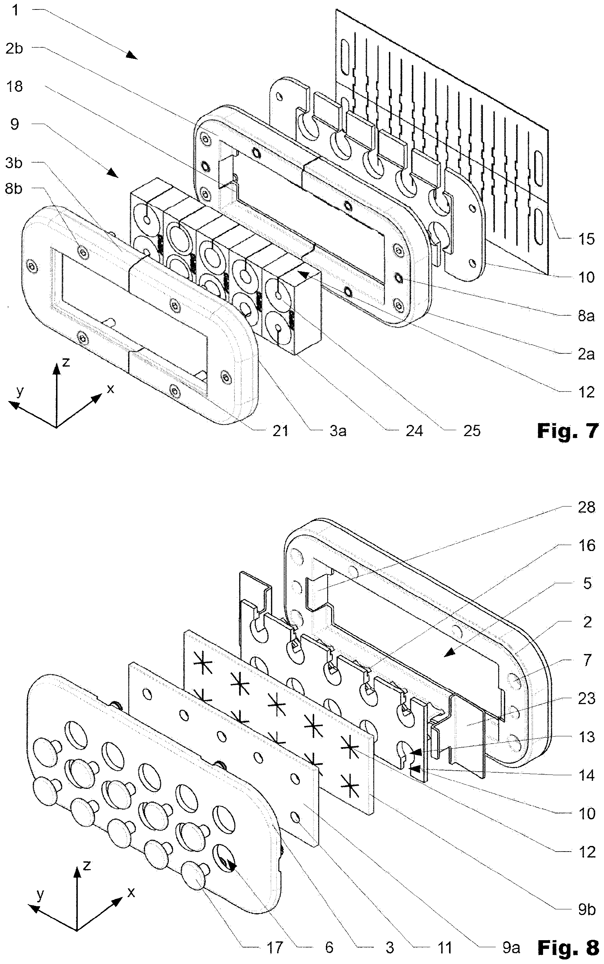

**Figur 7** zeigt eine siebte Ausführungsform einer erfindungsgemässen Kabeleinführung 1 bei der das Oberteil 3 und das Unterteil 2 zweiteilig ausgeführt sind. Die zweiten Befestigungsmittel 8, welche das Oberteil 3 und das Unterteil 2 miteinander wirkverbinden, sind hierfür mit Vorteil an sowohl dem ersten als auch dem zweiten Teil des Oberteils 3a, 3b, respektive des Unterteils 2a, 2b angebracht. Die gezeigten multiplen Durchführelemente 9 sind vom Typ Dichteinsatz und werden von einer über die ersten Befestigungsmittel 7 wirkverbundene Grundplatte 10 gehäuseseitig gestützt. Abschliessend ist ebenfalls über die ersten Befestigungsmittel 7 zwischen Gehäusewand 4 und Grundplatte 10 ein EMV-Schirmblech 15 angebracht zur Abschirmung elektromagnetischer Strahlung.

**Figur 8** zeigt eine achte Variante einer nicht unter den Schutzumfang der Ansprüche fallenden Kabeleinführung 1. Diese umfasst im gezeigten Fall ein Unterteil 2 und ein Oberteil 3 mit multiplen zweiten Durchgangsöffnungen 6, welche mit einem Stopfen 17 abgedeckt werden können. Weiter sind zwei Durchführelemente 9a, 9b in Form von Dichtplatten vorhanden, welche durch eine entsprechende Grundplatte 10 gestützt werden. Die Grundplatte 10 ist in der ersten Durchgangsöffnung 5 des Unterteils 2 eingebracht und wird von zwei Befestigungselementen 23 je mittels eines Hintergriffes mit dem Unterteil 2 wirkverbunden. Hierzu sind am Unterteil 2 entsprechende Eingriffe 28 vorgesehen. Während die erste Dichtplatte 9a vorgefertigte dritte Durchgangsöffnungen in Form von Löchern besitzt, weist die zweite Dichtplatte 9b mehrere sternförmige Schlitze 12 auf, welche zum Durchstossen mit dem Kabel gedacht sind und dadurch dritte Durchgangsöffnungen 11 formen. Die sternförmigen Schlitze 12 haben den Vorteil, dass diese nach dem Durchstossen und dem Einführen eines Kabels kurze dreieckige Zugentlastungsleisten 16 für das entsprechende Kabel bereitstellen. Zusätzlich dazu weist in diesem Fall die Grundplatte 10 an jeder entsprechenden vierten Durchgangsöffnung 13 eigene Zugentlastungsleisten 16 auf.

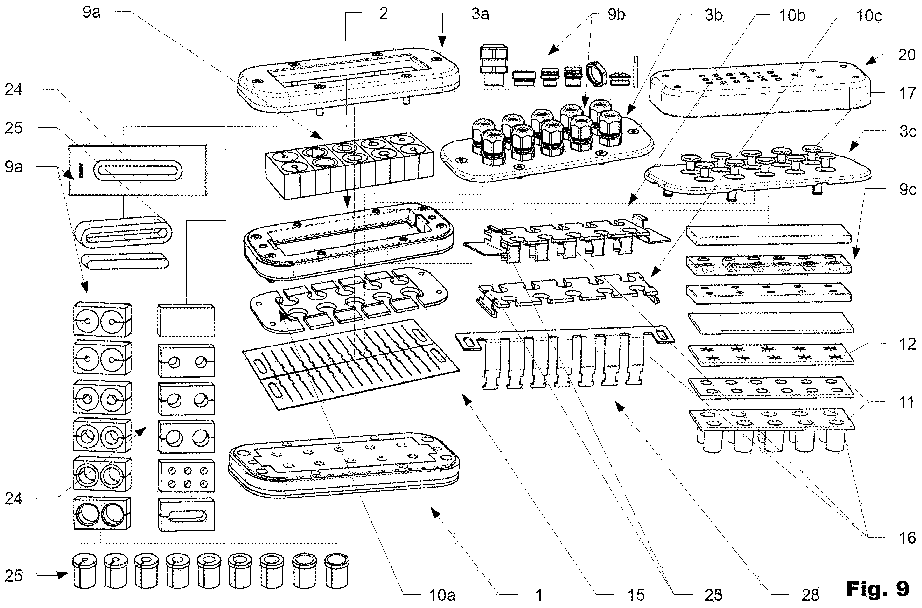

**Figur 9** zeigt eine Auswahl von möglichen modularen Kombinationen der erfindungsgemässen Kabeleinführung 1. Die eingezeichneten Linien deuten eine Auswahl von vorteilhaften Kombinationsmöglichkeiten der einzelnen Bauteile an. Weitere, nicht eingezeichnete Kombinationsmöglichkeiten sind jedoch ebenfalls denkbar. Das Unterteil 2 kann hiernach mit einem ebenfalls rahmenförmigen Oberteil 3a über die zweiten Befestigungsmittel 8 wirkverbunden werden. Zwischen dieser Ausführungsform des Oberteiles 3a und dem Unterteil 2 ist vorzugsweise das mindestens eine Durchführelement 9a des Typs Dichteinsatz angeordnet. Die im linken Teil der Abbildung gezeigte Gruppe von Dichteinsätzen 9a sind aufteilbar in einteilige oder mehrteilige Dichteinsätze, welche entweder alleine oder gemeinsam mit weiteren Dichteinsätzen vorzugsweise die ganze Kontur der ersten Durchgangsöffnung 5 einnehmen können. Die zweigeteilten Dichteinsätze haben den Vorteil, dass der erste, äussere Einsatz 24 ein standardisierter Teil sein kann in dem je nach Ausführung des Kabels ein passender innerer Einsatz 25 eingebracht wird. Alle einteiligen bzw. zweiteiligen Dichteinsätze inklusive der inneren und äusseren Einsätze können mit einem seitlichen Schlitz 12 ausgestattet sein, welche das Einführen eines jeweiligen Kabels in die dritte Durchgangsöffnung 1 1 erleichtert.

Ebenfalls kann das Oberteil 3 auch mit mehreren zweiten Durchgangsöffnungen 6 ausgestaltet sein, wie die Variante des Oberteils 3b darstellt. Diese eignen sich zur jeweiligen Aufnahme eines entsprechenden Kabels. Falls die zweiten Durchgangsöffnungen 6 nicht mit einem Kabel bestückt ist, können diese mit einem entsprechenden Stopfen 17 verdeckt und/oder abgedichtet werden. Ergänzend dazu können an den zweiten Durchgangsöffnungen 6 Durchführelemente 9 des Typs Kabelverschraubungen und/oder Schlauchverschraubungen 9b angebracht werden. Hiervon sind verschiedene Varianten in **Figur 9** oben dargestellt. Weitere, hier nicht abgebildete Varianten sind ebenfalls möglich. Die Kabelverschraubungen 9b können ergänzend eine Dichtung zum Abdichten eines eingeführten Kabels umfassen.

Weiterhin kann die Kabeleinführung mindestens ein Durchführelement 9 des Typs Dichtplatte umfassen. Eine nicht abschliessende Auswahl von möglichen Ausführungsformen von Dichtplatten 9c ist auf der rechten Seite der **Figur 9** gegeben. Bei Verwendung von Dichtplatten 9c werden diese mit Vorteil zwischen einem Oberteil 3, ähnlich dem Oberteil 3c, und dem Unterteil 2 angeordnet, wie von der entsprechenden Linie angedeutet. Die multiplen zweiten Durchgangsöffnungen 6 des Oberteils 3c können im Fall, dass diese nicht mit einem Kabel bestückt sind, mit einem Stopfen 17 verschlossen werden. Die dritten Durchgangsöffnungen 11 der Dichtplatten 9c können entweder vorkonfektioniert bereits in der Dichtplatte 9c vorgesehen sein, oder erst durch entsprechendes Durchstossen mit einem Kabel oder ähnliches erzeugt werden. Ebenfalls denkbar sind Varianten, wo die Positionen zum Durchstossen mittels angedeuteter Konturen und/oder vorgefertigten Schlitzen 12 markiert sind. Die Schlitze 12 haben den Vorteil, dass diese das Durchführen des Kabels vereinfachen. Die abgebildeten sternförmigen Schlitze 12 haben zusätzlich den Vorteil, dass die dreieckförmigen Bereiche der Dichtplatte 9c, welche bei durchgeführten Kabel verformt werden und an dem Kabel anliegen, wie eine Zugentlastungsleiste wirken. Alternativ oder ergänzend dazu kann die Dichtplatte 9c ebenfalls eine vorkonfektionierte Zugentlastungleiste 16 an der mindestens einen dritten Durchgangsöffnung 11 aufweisen. Um die mindestens eine Dichtplatte 9c im verbauten Zustand zu stützen und das Herausfallen aus der Kabeleinführung 1 zu verhindern kann zusätzlich eine Grundplatte 10 verbaut werden. Da die Dichtplatten 9c dünner ausgestaltet sein können als die ebenfalls verbaubaren Dichteinsätze 9a bietet sich eine Grundplatte 10b, bzw. 10c an, welche von vorne in das Unterteil eingesetzt wird und über Befestigungselemente 23 an dem Unterteil 2 fixiert werden. Wie dargestellt, kann die Grundplatte 10 ebenfalls Zugentlastungsleiten 16 an den vierten Durchgangsöffnungen 13 der Grundplatte 10 umfassen (siehe Grundplatte 10c).

Alternativ oder ergänzend zu diesen aufgeführten Variationen kann eine Zugentlastung ebenfalls als separates Zugentlastungselement 26 realisiert werden. Dieses kann sowohl von hinten an die Grundplatte 10a oder direkt das Unterteil 2 angebracht werden. Auch eine Verwendung eines zusätzlichen Schirmbleches 15 ist bei den verschiedenen Varianten denkbar.

**LISTE DER BEZUGSZEICHEN**

| | | | |
|---|---|---|---|
| 1 | Kabeleinführung | | |
| 2 | Unterteil | 14 | Schlitz (Grundplatte) |
| 3 | Oberteil | 15 | Schirmblech |
| 4 | Gehäusewand | 16 | Zugentlastungleiste |
| 5 | Erste Durchgangöffnung (Unterteil) | 17 | Stopfen |
| | | 18 | Umlaufender Rand (Unterteil) |
| 6 | Zweite Durchgangöffnung (Oberteil) | 19 | Umlaufender Rand (Oberteil) |
| | | 20 | Abdeckung |
| 7 | Erstes Befestigungsmittel | 21 | Fünfte Durchgangsöffnung |
| 8 | Zweites Befestigungsmittel | | (Abdeckung) |
| 9 | Durchführelemente | 22 | Brandschutzelement |
| 10 | Grundplatte | 23 | Befestigungselement |
| 11 | Dritte Durchgangsöffnung (Durchführelemente) | 24 | Äusserer Einsatz |
| | | 25 | Innerer Einsatz |
| 12 | Schlitz (Durchführelemente) | 26 | Zugentlastungselement |
| | | 27 | Aussparung |
| 13 | Vierte Durchgangsöffnung (Grundplatte) | 28 | Eingriff |

## Patentansprüche

1. Kabeleinführung (1) zur Einführung von mindestens einem Kabel in ein Gehäuse umfassend
a. ein rahmenförmiges Unterteil (2) mit einer ersten Durchgangsöffnung (5) zum Durchführen des mindestens einen Kabels und mit ersten Befestigungsmitteln (7) mittels denen das Unterteil (2) mit einer Gehäusewand (4) wirkverbindbar ist;
b. ein Oberteil (3), welches mindestens eine zweite Durchgangsöffnung (6) zum Durchführen des mindestens einen Kabels aufweist;
c. zweite Befestigungsmittel (8) mittels denen das das Oberteil (3) mit dem Unterteil (2) wirkverbindbar ist;
d. sowie mindestens ein Durchführelement (9) zum Durchführen des mindestens einen Kabels durch die Kabeleinführung, wobei das mindestens eine Durchführelement (9) in einem Bereich angeordnet ist, der sich innerhalb der Kontur der ersten Durchgangsöffnung (5) befindet, **dadurch gekennzeichnet, dass**
e. das mindestens eine Durchführelement (9) ein zweiteilig ausgestalteter Dichteinsatz ist und einen äusseren Einsatz (24) und einen in diesem einbringbaren inneren Einsatz (25) umfasst.

2. Kabeleinführung (1) gemäss Patentanspruch 1 **dadurch gekennzeichnet, dass** das mindestens eine Durchführelement (9) eine Dichtung umfasst, mittels welcher das mindestens eine Kabel gegenüber der Kabeleinführung abgedichtet ist.

3. Kabeleinführung (1) gemäss einem der vorangehenden Patentansprüche **dadurch gekennzeichnet, dass** das Durchführelement (9) eine deformierbare Komponente aus elastischem Kunststoff umfasst, welche in montiertem Zustand zwischen dem Oberteil (3) und dem Unterteil (2) eingeklemmt ist, und zur Abdichtung des mindestens einen durchgeführten Kabels dient.

4. Kabeleinführung (1) gemäss Patentanspruch 3 **dadurch gekennzeichnet, dass** ein Klemmmittel vorhanden ist, mittels dem die Stärke der Klemmung der deformierbaren Komponente des Durchführelementes (9) einstellbar ist.

5. Kabeleinführung (1) gemäss einem der vorangehenden Patentansprüche **dadurch gekennzeichnet, dass** die zweiten Befestigungsmittel (8) in Umfangsrichtung des Unterteils (2) zwischen den ersten Befestigungsmitteln (7) angeordnet sind.

6. Kabeleinführung (1) einem der vorangehenden Patentansprüche **dadurch gekennzeichnet, dass** das Unterteil (2) zur Wirkverbindung von mehr als einem unterschiedlichen Typ von Durchführelement (9) geeignet ist.

7. Kabeleinführung (1) gemäss Patentanspruch 6 **dadurch gekennzeichnet, dass** die Kabeleinführung (1) mehrere Durchführelemente (9) von mindestens einem Typ von Durchführelement (9) umfasst, welche nebeneinander und/oder hintereinander angeordnet sind.

8. Kabeleinführung (1) gemäss einem der vorangehenden Patentansprüche **dadurch gekennzeichnet, dass** das mindestens eine Durchführelement (9) vom Typ Dichteinsatz mehrteilig ausgestaltet ist.

9. Kabeleinführung (1) gemäss einem der vorangehenden Patentansprüche **dadurch gekennzeichnet, dass** das mindestens eine Durchführelement (9) zwischen dem Unterteil (2) und dem Oberteil (3) angeordnet ist.

10. Kabeleinführung (1) gemäss einem der vorangehenden Patentansprüche **dadurch gekennzeichnet, dass** das mindestens eine Durchführelement (9) eine dritte Durchgangsöffnung (11) aufweist.

11. Kabeleinführung (1) gemäss Patentanspruch 10 **dadurch gekennzeichnet, dass** ein Durchführelement einen Schlitz (12) zum seitlichen Einführen eines Kabels in die dritte Durchgangsöffnung (11) des Durchführelementes (9) aufweist.

12. Kabeleinführung (1) gemäss einem der vorangehenden Patentansprüche **dadurch gekennzeichnet, dass** eine Grundplatte (10) vorhanden ist, welche zur rückseitigen Abstützung des mindestens einen Durchführelementes (9) dient.

13. Kabeleinführung (1) gemäss Patentanspruch 12 **dadurch gekennzeichnet, dass** mindestens eine vierte Durchgangsöffnung (13) der Grundplatte (10) einen seitlichen Schlitz (14) zum Einführen eines mindestens einen Kabels besitzt.

14. Kabeleinführung (1) gemäss Patenanspruch 12 - 13 **dadurch gekennzeichnet, dass** die Grundplatte (10) mindestens eine Zugentlastung (16) umfasst.

15. Kabeleinführung (1) gemäss einem der vorangehenden Patentansprüche **dadurch gekennzeichnet, dass** das Unterteil mindestens ein Befestigungselement (23) zur Wirkverbindung eines Durchführelementes (9) aufweist.

16. Kabeleinführung (1) gemäss Patentanspruch 15 **dadurch gekennzeichnet, dass** das mindestens eine Befestigungselement (23) einen Hintergriff bildet

17. Kabeleinführung (1) gemäss einem der vorangehenden Patentansprüche **dadurch gekennzeichnet, dass** die zweiten Befestigungsmittel (8) eine Schraubverbindung und/oder eine Schnappverbindung sind.

18. Kabeleinführung (1) gemäss einem der vorangehenden Patentansprüche **dadurch gekennzeichnet, dass** das Unterteil und/oder das Oberteil in Umfangsrichtung mehrteilig ausgestaltet sind.

19. Kabeleinführung (1) gemäss einem der vorangehenden Patentansprüche **dadurch gekennzeichnet, dass** die Kabeleinführung mindestens eine Zugentlastung (16) umfasst, welches zur Wirkverbindung mit dem Unterteil vorgesehen ist.

20. Kabeleinführung (1) gemäss einem der vorangehenden Patentansprüche **dadurch gekennzeichnet, dass** die mindestens eine Durchgangsöffnung (6) des Oberteils (3) von einem Stopfen (17) verschliessbar ist.

21. Kabeleinführung (1) gemäss einem der vorangehenden Patenansprüche **dadurch gekennzeichnet, dass** mittels der ersten Befestigungsmittel (7) ein Schirmblech (15) zum Abschirmen von elektro-magnetischer Strahlung wirkverbunden ist.

22. Kabeleinführung (1) gemäss einem der vorangehenden Patentansprüche **dadurch gekennzeichnet, dass** eine Brandschutzelement (22) vorhanden ist, welche im montierten Zustand mit dem Unterteil (2) wirkverbunden ist und aus im Brandfall aufquellbarem Material besteht.

23. Kabeleinführung (1) gemäss einem der vorangehenden Patenansprüche **dadurch gekennzeichnet, dass** die ersten Befestigungsmittel (7) bei an dem Unterteil (2) angebrachten zweiten Befestigungsmitteln (8) lösbar ausgestaltet sind.

## Claims

1. Cable entry (1) for routing at least one cable into a housing, comprising:
a. a frame-like bottom part (2) with a first passage opening (5) for routing through the at least one cable and with first fastening means (7) by means of which the bottom part (2) can be operatively connected to a housing wall (4);
b. a top part (3) which has at least one second passage opening (6) for routing through the at least one cable;
c. second fastening means (8) by means of which the top part (3) can be operatively connected to the bottom part (2);
d. and at least one lead-through element (9) for routing the at least one cable through the cable entry, wherein the at least one lead-through element (9) is arranged in a region which is located within the contour of the first passage opening (5), **characterized in that**
e. the at least one lead-through element (9) is a sealing insert of two-part design and comprises an outer insert (24) and an inner insert (25) which can be introduced into the outer insert.

2. Cable entry (1) according to Patent Claim 1, **characterized in that** the at least one lead-through element (9) comprises a seal by means of which the at least one cable is sealed off from the cable entry.

3. Cable entry (1) according to either of the preceding patent claims, **characterized in that** the lead-through element (9) comprises a deformable component composed of elastic plastic, which deformable component is clamped between the top part (3) and the bottom part (2) in the assembled state, and serves for sealing the at least one led-through cable.

4. Cable entry (1) according to Patent Claim 3, **characterized in that** a clamping means is provided, by means of which the strength of the clamping of the deformable component of the lead-through element (9) can be adjusted.

5. Cable entry (1) according to one of the preceding patent claims, **characterized in that** the second fastening means (8) are arranged between the first fastening means (7) in the circumferential direction of the bottom part (2).

6. Cable entry (1) according to one of the preceding patent claims, **characterized in that** the bottom part (2) is suitable for interconnecting more than one different type of lead-through element (9).

7. Cable entry (1) according to Patent Claim 6, **characterized in that** the cable entry (1) comprises a plurality of lead-through elements (9) of at least one type of lead-through elements (9) which are arranged next to one another and/or one behind the other.

8. Cable entry (1) according to one of the preceding patent claims, **characterized in that** the at least one lead-through element (9) of the sealing insert type is a multi-part design.

9. Cable entry (1) according to one of the preceding patent claims, **characterized in that** the at least one lead-through element (9) is arranged between the bottom part (2) and the top part (3).

10. Cable entry (1) according to one of the preceding patent claims, **characterized in that** the at least one lead-through element (9) has a third passage opening (11).

11. Cable entry (1) according to Patent Claim 10, **characterized in that** a lead-through element comprises a slot (12) for laterally routing a cable into the third passage opening (11) of the lead-through element (9).

12. Cable entry (1) according to one of the preceding patent claims, **characterized in that** a base plate (10) is provided, which serves to support the at least one lead-through element (9) at the rear.

13. Cable entry (1) according to Patent Claim 12, **characterized in that** at least a fourth passage opening (13) of the base plate (10) has a lateral slot (14) for routing in at least one cable.

14. Cable entry (1) according to Patent Claims 12-13, **characterized in that** the base plate (10) comprises at least one strain-relief means (16).

15. Cable entry (1) according to one of the preceeding patent claims, **characterized in that** the bottom part comprises at least one fastening element (23) for interconnecting a lead-through element (9).

16. Cable entry (1) according to Patent Claim 15, **characterized in that** the at least one fastening element (23) forms an undercut.

17. Cable entry (1) according to one of the preceding patent claims, **characterized in that** the second fastening means (8) are a screw connection and/or a snap connection.

18. Cable entry (1) according to one of the preceding patent claims, **characterized in that** the bottom part and/or the top part are/is a multi-part design in the circumferential direction.

19. Cable entry (1) according to one of the preceding patent claims, **characterized in that** the cable entry comprises at least one strain-relief means (16) which is provided for interconnecting the bottom part.

20. Cable entry (1) according to one of the preceding patent claims, **characterized in that** the at least one passage opening (6) of the top part (3) can be closed by a plug (17).

21. Cable entry (1) according to one of the preceding patent claims, **characterized in that** a shielding plate (15) for shielding against electromagnetic radiation is operatively connected by means of the first fastening means (7).

22. Cable entry (1) according to one of the preceding patent claims, **characterized in that** a fire-protection element (22) is provided, which is operatively connected to the bottom part (2) in the assembled state and consists of material which can swell in the case of fire.

23. Cable entry (1) according to one of the preceding patent claims, **characterized in that** the first fastening means (7) are of detachable design when second fastening means (8) are attached to the bottom part (2).

## Revendications

1. Entrée de câble (1) pour l'entrée d'au moins un câble dans un boîtier, comprenant
a. une partie inférieure (2) en forme de cadre avec une première ouverture de passage (5) pour le passage de l'au moins un câble et avec des premiers moyens de fixation (7) au moyen desquels la partie inférieure (2) peut être reliée fonctionnellement à une paroi de boîtier (4);
b. une partie supérieure (3), qui présente au moins une deuxième ouverture de passage (6) pour le passage de l'au moins un câble;
c. des deuxièmes moyens de fixation (8) au moyen desquels la partie supérieure (3) peut être reliée fonctionnellement à la partie inférieure (2);
d. ainsi qu'au moins un élément de passage (9) pour le passage de l'au moins un câble à travers l'entrée de câble, l'au moins un élément de passage (9) étant agencé dans une zone qui se trouve à l'intérieur du contour de la première ouverture de passage (5), **caractérisé en ce que**
e. l'au moins un élément de passage (9) est un insert d'étanchéité réalisé en deux parties et comprend un insert extérieur (24) et un insert intérieur (25) pouvant être introduit dans celui-ci.

2. Entrée de câble (1) selon la revendication 1, **caractérisée en ce que** l'au moins un élément de passage (9) comprend un joint d'étanchéité au moyen duquel l'au moins un câble est étanchéifié par rapport à l'entrée de câble.

3. Entrée de câble (1) selon l'une quelconque des revendications précédentes, **caractérisée en ce que** l'élément de passage (9) comprend un composant déformable en matière plastique élastique qui, à l'état monté, est serré entre la partie supérieure (3) et la partie inférieure (2) et sert à étanchéifier l'au moins un câble passé.

4. Entrée de câble (1) selon la revendication 3, **caractérisée en ce qu'**un moyen de serrage est présent, au moyen duquel l'intensité du serrage du composant déformable de l'élément de passage (9) peut être réglée.

5. Entrée de câble (1) selon l'une quelconque des revendications précédentes, **caractérisée en ce que** les deuxièmes moyens de fixation (8) sont agencés entre les premiers moyens de fixation (7) dans la direction circonférentielle de la partie inférieure (2).

6. Entrée de câble (1) selon l'une quelconque des revendications précédentes, **caractérisée en ce que** la partie inférieure (2) est adaptée à la liaison fonctionnelle de plus d'un type différent d'élément de passage (9).

7. Entrée de câble (1) selon la revendication 6, **caractérisée en ce que** l'entrée de câble (1) comprend plusieurs éléments de passage (9) d'au moins un type d'élément de passage (9), qui sont agencés les uns à côté des autres et/ou les uns derrière les autres.

8. Entrée de câble (1) selon l'une quelconque des revendications précédentes, **caractérisée en ce que** l'au moins un élément de passage (9) du type insert d'étanchéité est réalisé en plusieurs parties.

9. Entrée de câble (1) selon l'une quelconque des revendications précédentes, **caractérisée en ce que** l'au moins un élément de passage (9) est agencé entre la partie inférieure (2) et la partie supérieure (3).

10. Entrée de câble (1) selon l'une quelconque des revendications précédentes, **caractérisée en ce que** l'au moins un élément de passage (9) présente une troisième ouverture de passage (11).

11. Entrée de câble (1) selon la revendication 10, **caractérisée en ce qu'**un élément de passage présente une fente (12) pour l'entrée latérale d'un câble dans la troisième ouverture de passage (11) de l'élément de passage (9).

12. Entrée de câble (1) selon l'une quelconque des revendications précédentes, **caractérisée en ce qu'**une plaque de base (10) est présente, qui sert de support arrière à l'au moins un élément de passage (9).

13. Entrée de câble (1) selon la revendication 12, **caractérisée en ce qu'**au moins une quatrième ouverture de passage (13) de la plaque de base (10) possède une fente latérale (14) pour l'entrée d'au moins un câble.

14. Entrée de câble (1) selon les revendications 12 à 13, **caractérisée en ce que** la plaque de base (10) comprend au moins une décharge de traction (16).

15. Entrée de câble (1) selon l'une quelconque des revendications précédentes, **caractérisée en ce que** la partie inférieure présente au moins un élément de fixation (23) pour la liaison fonctionnelle d'un élément de passage (9).

16. Entrée de câble (1) selon la revendication 15, **caractérisée en ce que** l'au moins un élément de fixation (23) forme une prise arrière.

17. Entrée de câble (1) selon l'une quelconque des revendications précédentes, **caractérisée en ce que** les deuxièmes moyens de fixation (8) sont une liaison par vis et/ou une liaison par encliquetage.

18. Entrée de câble (I) selon l'une quelconque des revendications précédentes, **caractérisée en ce que** la partie inférieure et/ou la partie supérieure sont réalisées en plusieurs parties dans la direction circonférentielle.

19. Entrée de câble (1) selon l'une quelconque des revendications précédentes, **caractérisée en ce que** l'entrée de câble comprend au moins une décharge de traction (16), qui est prévue pour la liaison fonctionnelle avec la partie inférieure.

20. Entrée de câble (1) selon l'une quelconque des revendications précédentes, **caractérisée en ce que** l'au moins une ouverture de passage (6) de la partie supérieure (3) peut être fermée par un bouchon (17).

21. Entrée de câble (1) selon l'une quelconque des revendications précédentes, **caractérisée en ce qu'**une tôle de blindage (15) pour le blindage contre les rayonnements électromagnétiques est reliée fonctionnellement au moyen des premiers moyens de fixation (7).

22. Entrée de câble (1) selon l'une quelconque des revendications précédentes, **caractérisée en ce qu'**un élément de protection contre l'incendie (22) est présent, qui, à l'état monté, est relié fonctionnellement à la partie inférieure (2) et est constitué d'un matériau pouvant gonfler en cas d'incendie.

23. Entrée de câble (1) selon l'une quelconque des revendications précédentes, **caractérisée en ce que** les premiers moyens de fixation (7) sont réalisés de manière amovible lorsque les deuxièmes moyens de fixation (8) sont montés sur la partie inférieure (2).
